# EUROPÄISCHE PATENTSCHRIFT

(11) **EP 0 850 142 B1**
(45) Veröffentlichungstag und Bekanntmachung des Hinweises auf die Patenterteilung: **13.10.1999**
(21) Anmeldenummer: 96929311.7
(22) Anmeldetag: 22.08.1996
(51) Int. Cl.: B60B 33/00

(54) **LAUFROLLE, BSPW. LENKROLLE**
ROLLER, E.G. GUIDE ROLL
GALET DE ROULEMENT, NOTAMMENT GALET-GUIDE

(30) Priorität: 16.09.1995 DE 29514898 U
(43) Veröffentlichungstag der Anmeldung: 01.07.1998
(73) Patentinhaber: Tenterollen Gmbh & Co, 42929 Wermelskirchen (DE)
(72) Erfinder: STICKEL, Uwe, D-40767 Langenfeld (DE)
(74) Vertreter: Müller, Enno, Dipl.-Ing.
(86) Internationale Anmeldenummer: EP9603713
(87) Internationale Veröffentlichungsnummer: WO9710110

(56) Entgegenhaltungen:
- EP-A- 0 067 023
- DE-A- 1 950 653
- DE-A- 2 244 734
- DE-A- 2 910 555
- GB-A- 2 119 042
- US-A- 3 751 757

## Beschreibung

Die Erfindung bezieht sich auf eine Laufrolle, bspw. Lenkrolle, für Transportgeräte, wie Einkaufswagen oder dergleichen, zur Beförderung auf einem eine längsgerillte Oberfläche aufweisenden Transportband, mit einem mindestens eine Rille aufweisenden, in einer Gabel gelagerten Laufrad, wobei die Laufrolle seitenflächig eine als Fadenschutz dienende Abdeckscheibe aufweist und einen Stützfuß besitzt.

Durch die US-PS 3,751,757 ist es bekannt, einen Stützfuß kranzartig auszubilden mit vertikal orientiertem, abgefederten Verlagerungshub. Unter Eintauchen des entsprechenden Ringkranzes in die längsgerillte Oberfläche verlagert sich ein Sperrzahn in Richtung der Nabe des Laufrades. Unter Eintritt des Sperrzahns in eine dortige Rastnische wird das Laufrad drehgesperrt und so das mit solchen Laufrollen bestückte Transportgerät vom Transportband mitgeschleppt.

Aus der GB-OS 2 119 042 existiert der Vorschlag, die Mantelfläche des Laufrades zu rillen. Die Rille nimmt einen einen größeren lichten Durchmesser aufweisenden Ringkranz auf, der bei Eintauchen der durch die Rillung verbliebenen Laufrippen in die Rillen des Transportbandes in Richtung des Gabelgrundes gedrückt wird. Dort befindet sich ein ortsfester Sperrzahn, der in Zahnlükken des dortigen Ringkranzes eingreift und so die Drehbewegung des Laufrades blockiert.

Während bei beiden genannten Vorläufern die entsprechende Sperrmechanik innerhalb der Gabel der Lauf- bzw. Lenkrolle untergebracht ist, existiert aus der DE-AS 29 10 555, welche hier die Gattung der erfindungsgemäßen Lösung bildet, der Vorschlag, die Sperrmechanik auf der Außenseite der Gabel anzuordnen. Es handelt sich dort um einen transportbandseitig ausgerichteten, auf die eine Gabel außen aufgesetzten Stützschenkel. Letzterer wird vom Achsbolzen dieser Lenkrolle durchgriffen und zusätzlich mit Hilfe eines Zapfens gegen Verschwenken gesichert. Der Zapfen ist ein im Wege der Prägung erzeugter Vorsprung am besagten Stützschenkel. Der Vorsprung ragt in eine kongruent liegende Ausnehmung im Gabelschenkel. Innenseitig des Gabelschenkels befindet sich eine als Fadenschutz fungierende Abdeckscheibe. Eine ebensolche Abdeckscheibe befindet sich auch auf der anderen Seite des Laufrades.

Aufgabe der vorliegenden Erfindung ist es, eine verbesserte Laufrolle bzw. Lenkrolle für Transportbänder zu schaffen.

Gelöst ist diese Aufgabe durch die im Anspruch 1 angegebene Erfindung.

Daran anschließende Ansprüche geben vorteilhafte Ausgestaltungen des Gegenstandes der Erfindung an.

Zufolge solcher Ausgestaltung ist eine vor allem im Hinblick auf den speziellen Einsatzzweck verbesserte Laufrolle erzielt. Hierüber ergibt sich ein stabiler Teile-Verbund. Die Gabel braucht nicht verändert zu werden. Ihr Einsatz reicht auch für die spezielle Funktion voll aus. Erreicht ist das alles dadurch, daß der Stützfuß über eine nicht mitdrehende Abdeckscheibe gehaltert ist. Sowohl die Stützfuß-Funktion als auch die des Fadenschutzes können dabei baulich optimiert werden, wenn der Stützfuß gleich integral mit der Abdeckscheibe ausgebildet ist. Eine solche Lösung sieht dabei konkret so aus, daß der Stützfuß aus einer in einer Achsrichtung des Laufrades sich erstreckenden Erhöhung der Abdeckscheibe herauswachsend ausgebildet ist. Das läßt sich formtechnisch bestens beherrschen. Außerdem entsteht durch die Polydirektionalität von Wandungsabschnitten eine hohe innere Stabilität der unter Umständen sogar erheblichen mechanischen Beanspruchungen ausgesetzten Einheit Abdeckscheibe/Stützfuß. Im Hinblick auf die erstrebte Wirkung der Partikelabweisung, also des Fadenschutzes (Haare, Fäden, Draht), ist es sodann von Vorteil, daß der Stützfuß sich zur Stützfläche hin verjüngt. Die nicht mitdrehende Wirkung der Abdeckscheibe resultiert aus einem entsprechenden Verbund mit der Gabel, was im einzelnen so aussieht, daß die Gabel formschlüssig mit der Abdeckscheibe zusammenwirkt. Über einen entsprechenden Formschluß läßt sich eine recht großflächige Anlage nutzen, wenn die weitere Ausgestaltung dahin geht, daß in der Abdeckscheibe eine zungenförmige Tasche zur Aufnahme des Gabelschenkels vorgesehen ist. Selbstredend kann auch die andere Seite in einen entsprechenden Verbund gebracht werden nebst Zuordnung eines zweiten Stützfußes. Eine Ausgestaltung von sogar eigenständiger Bedeutung wird darin gesehen, daß das Laufrad eine Mehrzahl, insbesondere vier, von durch Längsrillen beabstandete Laufrippen aufweist und daß die einer Laufradmitte zugeordneten Laufrippen eine größere radiale Erstreckung aufweisen als die äußeren Laufrippen. Das kommt der klassischen konvexen Querverrundung des Laufmantels gleich und bringt eine auf ein kleineres Feld begrenzte Lauf- und Standberührung. Der Schwenkwiderstand fällt günstiger aus. Außerdem ergibt sich eine gestufte, lastabhängige Lauffunktion. Bei geringeren Lasten tragen die in der Ebene der Laufradmitte angeordneten Laufrippen. Erst wenn größere Lasten auftreten, wirken die peripheren mit. Baulich konkret ist die Situation so, daß zwei größere und zwei kleinere Laufrippen ausgebildet sind. Günstig ist es, wenn materialmäßig so verfahren wird, daß die Laufrippen aus härterem, jedoch deformierbarem Material bestehen als der Grund des Laufmantels. Weiter ist beachtet, daß der Abstand zwischen zwei Laufrippen eintauchfähig einer Breite der auf dem Transportband ausgebildeten Stege entspricht. Um etwa in die Rillen des Laufrades eingetretene, dort klemmend gehaltene Fremdkörper, wie bspw. Schottersteinchen, auszuwerfen, ist ein Rechenkörper vorgesehen, der in die Rillen eingreift. Er wirft solche Fremdkörper beim Radlauf beständig ab. Seine Befestigung ist mit baulich einfachen Mitteln derart realisiert, daß er im Gabelgrund gehaltert ist. Weiter erweist es sich als vorteilhaft, daß der Rechenkörper den Zenit übergreifend ausgebildet ist. Die Partikel fallen so schwerkraftunterstützt ab. Günstig ist es überdies noch, daß an einem Rechenzinken ein nach unten vorragender Auflagekörper ausgebildet ist. Auf diese Weise erhalten die Kammzinken praktisch einen in Richtung des Rades abgebogen Verlauf. Günstig ist es noch, daß der Rechenkörper vertikal bewegbar gehaltert ist. Das erlaubt ein selbsttätiges schwerkraftabhängiges Nachstellen und, bei stärkeren Belastungen, ein entsprechend nach oben gerichtetes Ausweichen.

Der Gegenstand der Erfindung ist nachstehend anhand eines zeichnerisch veranschaulichten Ausführungsbeispieles näher erläutert. Es zeigt
- Fig. 1: die erfindungsgemäß ausgebildete Lenkrolle in Seitenansicht, auf einem Transportband stehend, bei in Funktion befindlichem Stützfuß,
- Fig. 2: die Draufsicht auf Fig. 1,
- Fig. 3: die Lenkrolle in Seitenansicht, und zwar in Richtung des aus Fig. 1 hervorgehenden Pfeiles III gesehen,
- Fig. 4: die Gabel der Lenkrolle in Einzeldarstellung, und zwar in die Gabelhöhlung gesehen, dabei die gabelseitigen Halterungsmittel für einen Rechenkörper veranschaulichend,
- Fig. 5: eine Explosionsdarstellung von Gabel, Laufrad und Rechenkörper, zuordnungsorientiert,
- Fig. 6: den Rechenkörper in Einzeldarstellung, und zwar in Seitenansicht,

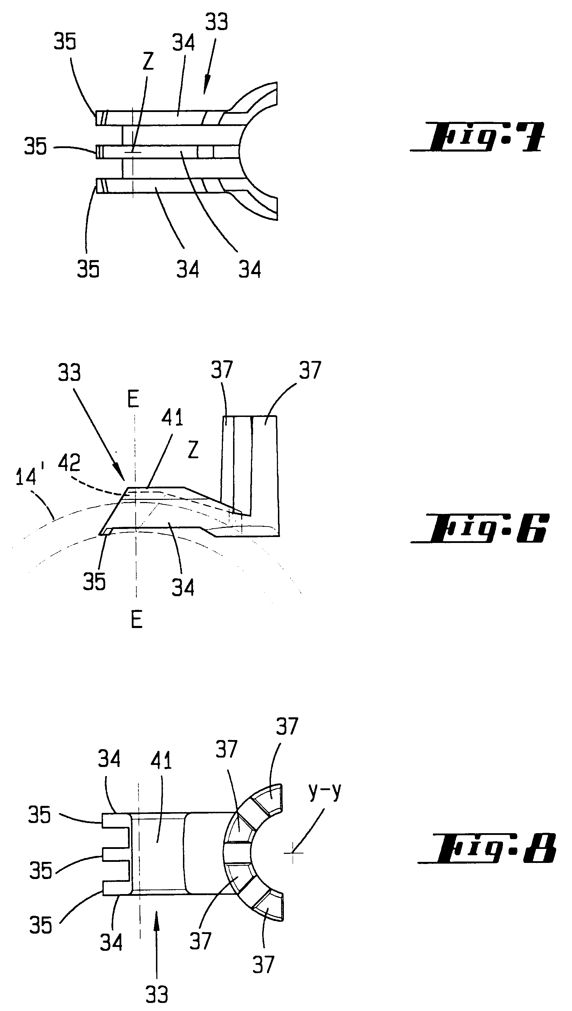

- Fig. 7: die Unteransicht hierzu,
- Fig. 8: die Draufsicht auf den Rechenkörper,

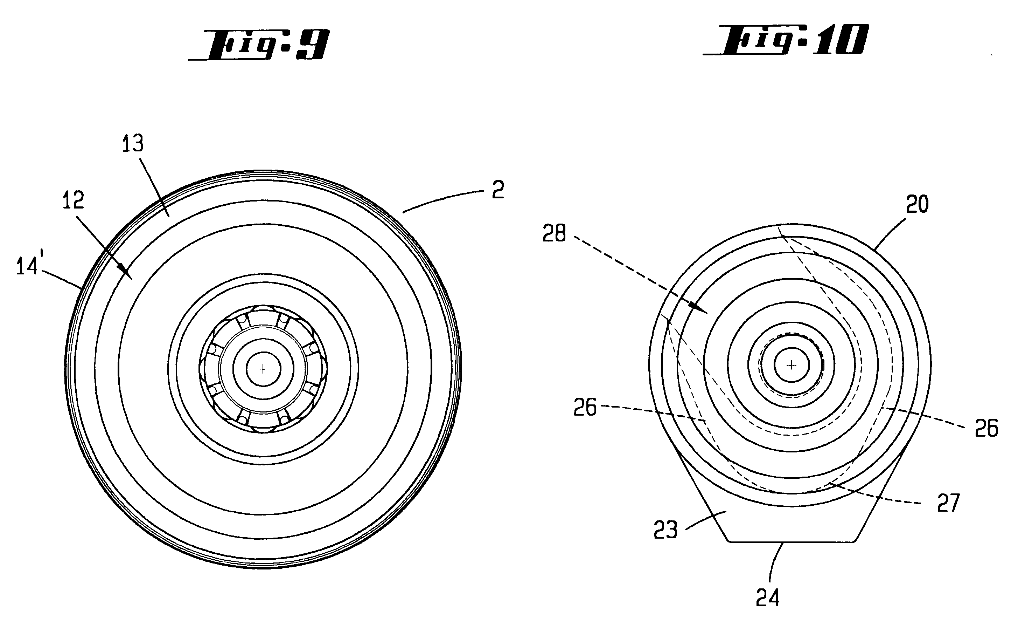

- Fig. 9: das Laufrad in Seitenansicht bei abgenommener, als Fadenschutz dienender Abdeckscheibe,

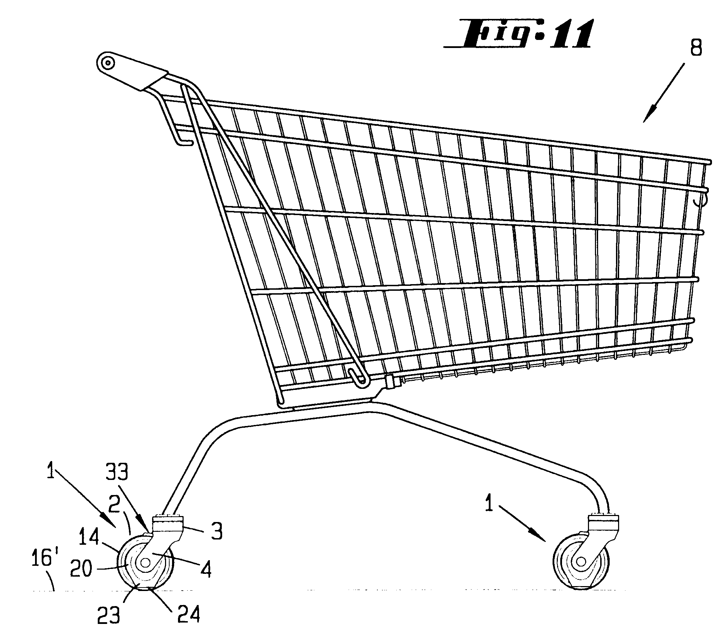

- Fig. 10: eine Seitenansicht gegen die Innenseite der genannten Abdeckscheibe mit außenseitig integral angeformtem Stützfuß und
- Fig. 11: einen mit den erfindungsgemäßen Lenkrollen/Laufrollen bestückten Einkaufswagen in Seitenansicht.

Die als Lenkrolle 1 ausgebildete Laufrolle lagert ein Laufrad 2. Letzteres ist mit einer Gabel 3 verachst.

Die Gabel 3 nimmt zwischen zwei Gabelschenkeln 4 einen den Gabelraum auf kürzestem Wege querenden Achsbolzen 5 auf. Der erstreckt sich horizontal. Seine geometrische Achse ist mit x-x bezeichnet.

Die Gabel 3 schwenkt um eine vertikale geometrische Achse y-y. Letztere erstreckt sich dementsprechend seitenversetzt zur die Achse x-x schneidenden Vertikalebene E-E. Die vertikale körperliche Achse bildet ein Zapfen 6. Der trägt an seinem freiragenden Abschnitt Außengewinde 7 zur Befestigung der Lenkrollen/Laufrollen an einem Transportgerät, bspw. einem Einkaufswagen 8.

Die achsbildende Partie des Zapfens 6 sitzt in einer Lagerbuchse 9 (vergl. Fig. 4). Er ist darin gegen axialen Abzug gesichert.

Gegebememfalls über ein in den Zeichnungen nicht dargestelltes Kugellager kann ein den Gabelkopf 10 überragender Tragabschnitt 11 auch randnah noch geführt abgestützt sein.

Der aus relativ hartem Material, insbesondere Kunststoff, hergestellte Radkörper 12 trägt felgenseitig einen Laufbelag 13 aus gummielastischem Material. Die Lauffläche selbst wird gebildet von mehreren, hier vier, axial beabstandeten Laufrippen 14. Diese sind widerstandsfähig, jedoch deformierbar, besitzen also die typischen Eigenschaften einer walkfähigen Bereifung.

Die zwischen den Laufrippen 14 belassenen Rillen tragen das Bezugszeichen 15.

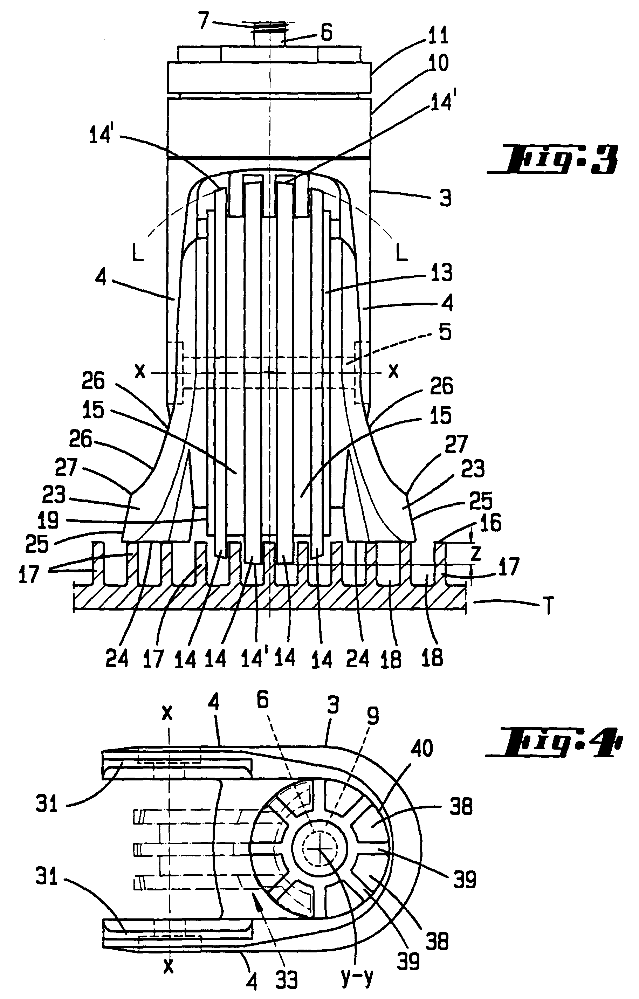

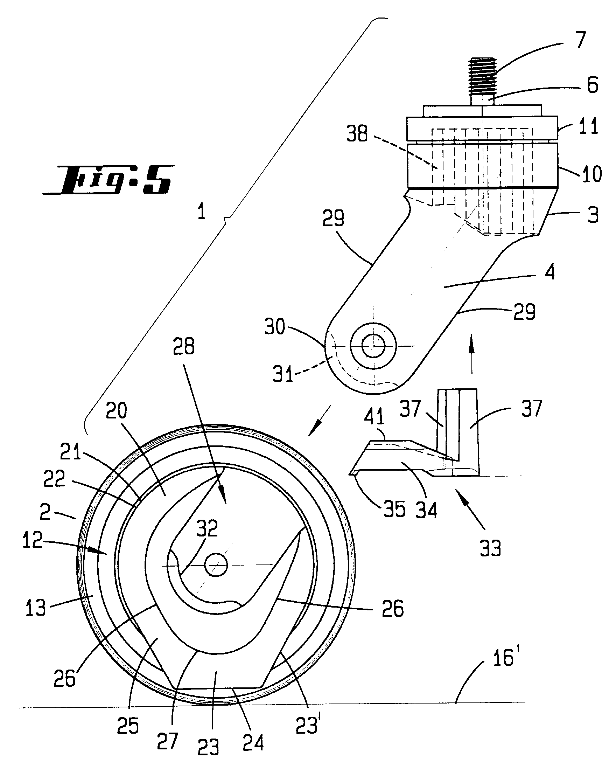

Eine mit der radseitigen Struktur zusammenwirkende Gegenstruktur ist an einem Transportband T verwirklicht. Letzteres bildet eine bspw. geneigt verlaufende Oberfläche 16. Die besteht aus parallel zueinander beabstandeten, gleich hohen Stegen 17 (vergl. Fig. 3). Die in Förderrichtung längsverlaufenden Stege 17 bilden eine längsgerillte Oberfläche 16. Die diesbezüglichen Längsrillen sind mit 18 bezeichnet. Die in Richtung der Achse x-x gemessene Breite der Laufrippen 14 ist deutlich geringer als der zwischen den Stegen 17 belassene, die Längsrillen 18 bildende Abstand. Eine nicht gerillte Lauffläche ist in den Fig. 5 und 11 dargestellt und mit 16' bezeichnet.

Die beiden inneren, der im wesentlichen gleich axial beabstandeten Laufrippen 14 besitzen eine größere radiale Erstreckung zur Laufradmitte, sprich Achse x-x, als die beiden äußeren Laufrippen 14. Es sei auf Fig. 3 verwiesen.

Die Lauffläche 14' der Laufrippen 14 kommt einer konvexen Querverrundung des Laufbelages 13 gleich, folgend der in Fig. 3 eingezeichneten Bogenlinie L-L. Deren Radius liegt im Mittelpunkt der Achse x-x. Eine solche Ausgestaltung ist im Hinblick auf den Schwenkwiderstand der Lenkrolle 1 günstiger als eine parallel zur Laufebene liegende Lauffläche. Es liegt vielmehr ein auf ein relativ kleines Feld begrenzte Lauf- bzw. Standberührung vor.

Beim dargestellten Ausführungsbeispiel sind zwei Laufrippen 14 größeren Durchmessers und zwei Laufrippen 14 kleineren Durchmessers verwirklicht; letztere erstrekken sich in der Nähe der Breitseiten 19 des Laufrades 2, dort deutlich zurückspringend (vergl. Fig. 3).

Die beiden inneren, exponierten Laufrippen 14 sind etwas breiter ausgebildet als die peripher liegenden; erstere sind demzufolge bei bei normaler Last die vorrangig tragenden. Erst bei Überlast wirken die äußeren Laufrippen 14 mitabstützend.

Beide Breitseiten 19 des Radkörpers 12 sind mit je einer Abdeckscheibe 20 besetzt. Diese bilden einen sogenannten Fadenschutz. Sie schließen mit ihrem Rand 21 im Rücken der Felge des Laufrades 2 in möglichst enger Fuge 22 zum Felgenrücken hin ab.

Die Abdeckscheiben 20 sind der Lenkrolle 1 nicht mitdrehend zugeordnet und setzen sich in einen Stützfuß 23 fort. Der ist vertikal nach unten gerichtet. Den unteren Abschluß bildet eine ebene Stützfläche 24. Der Stützfuß 23 verjüngt sich in Richtung der Stützfläche 24. Die Verjüngung ist stufenlos und erwächst als Tangenten des Randes 21. Der Verjüngungswinkel ist mit Alpha bezeichnet und beträgt ca. 60°. Der Stützfuß 23 verläuft spiegelsymmetrisch in der die Achse x-x schneidenden vertikalen Ebene E-E. Der Rand 21 taucht in die Breitseite 19 ein.

Der Scheibenradius entspricht zwei Drittel des Laufrad-Radius'.

Die breitseitige Außenkontur der Abdeckscheiben 20 überragt deutlich auswölbend die Breitseiten 19; der Stützfuß 23 selbst geht ausstellmäßig noch darüber hinaus. Er formt eine in Achsrichtung (Achse x-x) sich erstreckende Erhöhung 25, die wie ein Erker die Außenseiten der Gabelschenkel 4 noch deutlich überragt.

Die radabgewandt aus der Abdeckscheibe 20 herauswachsende Erhöhung 25 hat im Bereich der Stützfläche 24 ihre größte Breite erzielt. Letztere deckt in der besagten Achsrichtung mindestens zwei die Oberfläche 16 bildende Stege 17 des Transportbandes T ab, kann also nicht in die Längsrillen 18 eintauchen.

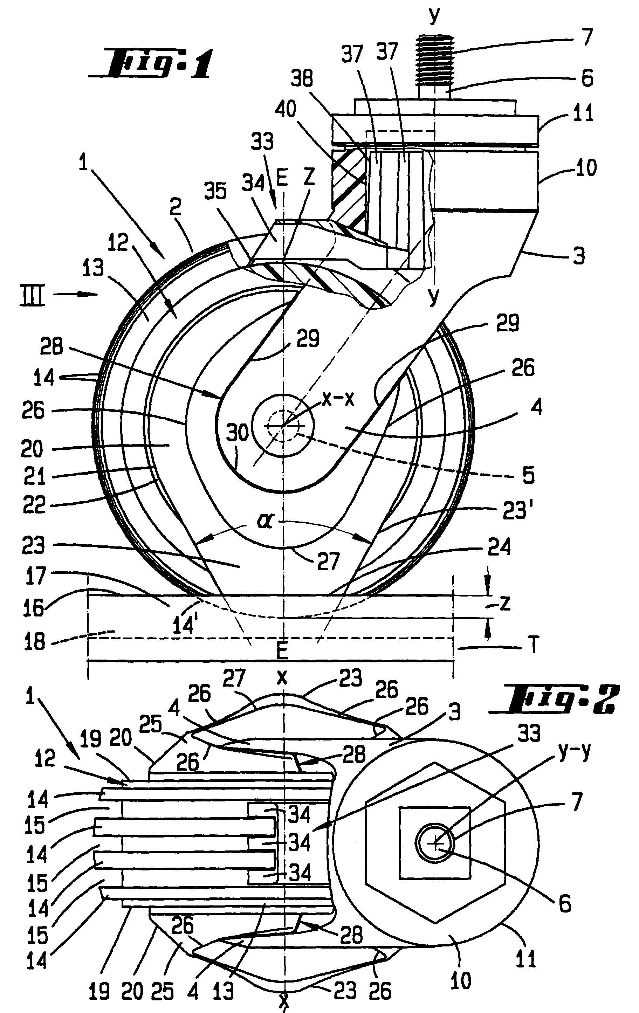

Die radiale Erstreckung der Stützfüße 23 ist kürzer als der Radius der den größten Durchmesser aufweisenden Laufrippen 14 des Laufrades 2. Unter Einsinken der Laufrippen 14 in die Längsrillen 18 setzen die beidseitigen Stützfüße 23 auf die Oberfläche 16 auf. Das verhindert, daß alle so ausgebildeten Laufrollen des Einkaufswagens 8 bspw. bei ansteigend verlaufendem Transportband T zurückrollen. Der Einkaufswagen 8 wird radgebremst mitgeführt. Entsprechendes gilt auch bei vertikal ausgerichteten Transportbändern. Die genutzte Eintauchtiefe ist in Fig. 1 mit z angegeben und entspricht etwa der halben Tiefe der Längsrillen 18.

Trotz relativ geringer Materialdicke der Abdeckscheiben 20 wird eine hochstabile Stütze erreicht durch Maßnahmen einer Veränderung des Wandungsverlaufs, die hier darin bestehen, daß an der Abdeckscheibe 20 gratartige Randwülste 26 geformt sind. Die überragen die im Grunde kugelabschnittförmig gestaltete Oberfläche der Abdeckscheibe 20 und geben ihr, im radialen Querschnitt gesehen, peripher ein stumpfwinkliges, umlaufendes Wulstprofil. Die beiden weit oberseitig des horizontalen Diameters des Laufrades 2 schon ansetzenden Randwülste 26 sind im Bereich unterhalb des Achsbolzens 5 zu einer -von der Achse aus gesehen- konkaven Bogenlinie 27 vereinigt. Diese Bogenlinie läuft im Bereich des Stützfußes 23. Eine solche Struktur verbessert auch die Funktion des Fadenschutzes, wobei sich die in Bezug auf die Fahrrichtung fliehend gestaltete Verjüngungskante 23' als fadenabstreifend erweist. Hier gegentretende Partikel werden in Richtung der Oberfläche 16 abgedrängt; durch eine entsprechende Halsung der in die ausgenommene Breitseiten 19 eintauchenden Abdeckscheibe 20 kommt es an dieser kritischen Stelle ebenfalls zur beschriebenen abweisenden Wirkung.

Die nicht mitdrehende Zuordnung der Abdeckscheiben 20 ist über die Gabel 3, respektive ihre Gabelschenkel 4, erzielt. Die Gabel 3 ist über die Gabelschenkel 4 formschlüssig mit der bzw. den Abdeckscheiben 20 verbunden. Jede Abdeckscheibe 20 weist dazu eine Tasche 28 auf. Diese öffnet radial auswärts gerichtet in Richtung der schräg verlaufenden Gabelschenkel 4. Die Tasche 28 besitzt einen der Umrißgestalt der einliegenden Enden der Gabelschenkel 4 entsprechende breitseitige Ausnehmung. Tasche 28 und Gabelschenkel 4 sind zungenförmig. Ihre parallel verlaufenden Längs-Schmalkanten 29 gehen in eine konzentrisch zur Achse x-x verlaufende Rundung 30 über. Sowohl die mehrere Millimeter breiten Längs-Schmalkanten 29 als auch ihre Fortsetzung in Form der Rundung 30 liegen satt und zum überwiegenden Teil sogar tragend an den korrespondierenden Innenflächen der Tasche 28 an.

Die Tasche 28 kann auch auf der Außenseite geschlossen ausgebildet sein, so daß die Einführung der zungenförmigen Gabelschenkel über einen radialen, randnahen Tascheneingang erfolgt. Hier wie dort ergibt sich die Fesselung bzw. Sicherung der entsprechenden Formschlußverbindung über den kongruent liegende Bohrungen aller Teile durchgreifenden Achsbolzen 5, der in üblicher Weise endgesichert ist und bspw. mit einer Sichtkappe abgedeckt sein kann. Bei der seitlich offenen Lösung läßt sich eine Art Vorfesselung der Gabelschenkel 4 erreichen, indem deren im Bereich der Rundung 30 liegenden Enden einen Randschlitz 31 tragen zum Eintritt in einen in Fig. 5 dargestellten konkav verlaufenden Bogensteg 32 auf der im Rundungsbereich liegenden Seite des Taschengrundes.

Obwohl der Stützfuß 23 auch separat hergestellt und der Abdeckscheibe 20 in klassischer Weise zugeordnet werden könnte, bevorzugt das Ausführungsbeispiel eine Lösung dergestalt, daß der Stützfuß 23 integral mit der Abdeckscheibe 20 gestaltet ist.

Um sicherzustellen, daß bei der an sich vorteilhaften engen Folge an Laufrippen 14 und den damit entsprechend eng vorliegenden Rillen 15 dort klemmend gehaltene Partikel eintreten, wie bspw. kleine Schottersteine, ist der Lenkrolle 1 ein Rechenkörper 33 zugeordnet. Der greift mit Rechenzinken 34 in die Rillen 15 ein. Die freien Enden der im wesentlichen tangential zum Laufrad 2 ausgerichteten Rechenzinken 34 gehen in einen nach unten, d. h. in Richtung des Radkörpers 2 abgewinkelten Auflagekörper 35 über. Unter diesem läuft berührend der Grund der Rillen 15. Dementsprechend erstreckt sich der Rechenkörper 33 oberhalb, also im Zenit Z des Laufrades 2. Seine Rechenzinken 34 sind aber von solcher Länge, daß sie den Zenit Z übergreifend ausgebildet sind, dem zulaufenden Grund der Rillen 15 also voreilend. Hierdurch werden die sich etwa einklemmenden Partikel schon im Bereich der stärker abschüssigen Wölbungszone gelöst. Sie können dann entsprechend schwerkraftabhängig zurückfallen.

Um eine das Ausheben der Partikel erleichternde Wirkung an den Enden der Rechenzinken 34 zu erhalten, sind diese schrägstehend ausgebildet. Es ergibt sich ein fliehener Flankenrücken von ca. 45°. Einbezogen ist hier auch der Rücken des Auflagekörpers 35. Sie wirken so pflügend.

Der Rechenkörper 33 ist im Gabelgrund 36 gehaltert. Er weist dazu im zinkenabgewandten Bereich nach oben gerichtet ausgehende Haltefinger 37 auf. Letztere greifen in querschnittsentsprechende Vertiefungen 38 im Gabelgrund 36 ein. Die Vertiefungen 38 gehen besonders deutlich aus Fig. 4 hervor. Dort ist ersichtlich, daß besagte Vertiefungen 38 von den Zwischenräumen die Lagerbuchse 9 radial abstützender Stegrippen 39 gebildet sind. Das entsprechend sternförmige Gerippe findet seinen peripheren Abschluß an einer ringförmigen Innenwandung 40 des Gabelkopfes 10, in welcher Innenwandung 40 die auswärts gerichteten Enden der Stegrippen 39 wurzeln.

Es sind insgesamt vier solcher Vertiefungen 38 für die beschriebene Steckverbindung genutzt. Es handelt sich um die vier in Richtung der Gabelerstreckung liegenden. Der korrespondierende Haltefingerkranz am Rechenkörper 33 ergibt sich aus Fig. 8.

Die Einlagerung des Rechenkörpers 33 geschieht mit etwas Spiel in Richtung der Achse y-y, so daß der Rechenkörper 33 vertikal bewegbar im Gabelgrund 36 gehaltert ist, sich also schwergewichtsabhängig bei Verschleiß selbsttätig nachstellen kann. Die den Zwischenraum zwischen den Rechenzinken 34 nach oben hin begrenzende Decke 41 des Rechenkörpers 33 beläßt einen genügend großen radialen Spalt 42 zu den Laufrippenflächen 14'.

Zur Erhöhung der Richtungsstabilität beim Verfahren des Einkaufswagens 8 sind zweckmäßig die in Fahrtrichtung vorne liegenden Laufrollen als Bockrollen gestaltet. Alternativ kann so vorgegangen werden, daß dort die gleiche Lenkrolle 1 verwendet wird, die aber in der dargestellten Ausrichtung richtungsblockiert ist. Die entsprechenden Mittel sind nicht dargestellt.

## Patentansprüche

1. Laufrolle, bspw. Lenkrolle (1), für Transportgeräte, wie Einkaufswagen (8) oder dergleichen, zur Beförderung auf einem eine längsgerillte Oberfläche (16) aufweisenden Transportband (T), mit einem mindestens eine Rille (15) aufweisenden, in einer Gabel (3) gelagerten Laufrad (2), wobei die Laufrolle seitenflächig eine als Fadenschutz dienende Abdeckscheibe (20) aufweist und einen Stützfuß (23) besitzt, dadurch gekennzeichnet, daß der Stützfuß (23) über eine nicht mitdrehende Abdeckscheibe (20) gehaltert ist.

2. Laufrolle nach Anspruch 1 oder insbesondere danach, dadurch gekennzeichnet, daß der Stützfuß (23) integral mit der Abdeckscheibe (20) ausgebildet ist.

3. Laufrolle nach einem oder mehreren der vorhergehenden Ansprüche oder insbesondere danach, dadurch gekennzeichnet, daß der Stützfuß (23) aus einer in einer Achsrichtung des Laufrades (2) sich erstreckenden Erhöhung (25) der Abdeckscheibe (20) herauswachsend ausgebildet ist.

4. Laufrolle nach einem oder mehreren der vorhergehenden Ansprüche oder insbesondere danach, dadurch gekennzeichnet, daß der Stützfuß (23) sich zur Stützfläche (24) hin verjüngt.

5. Laufrolle nach einem oder mehreren der vorhergehenden Ansprüche oder insbesondere danach, dadurch gekennzeichnet, daß die Gabel (3) formschlüssig mit der Abdeckscheibe (20) zusammenwirkt.

6. Laufrolle nach einem oder mehreren der vorhergehenden Ansprüche oder insbesondere danach, dadurch gekennzeichnet, daß in der Abdeckscheibe (20) eine zungenförmige Tasche (28) zur Aufnahme des Gabelschenkels (4) vorgesehen ist.

7. Laufrolle nach einem oder mehreren der vorhergehenden Ansprüche oder insbesondere danach, dadurch gekennzeichnet, daß das Laufrad (2) eine Mehrzahl, insbesondere vier, von durch Längsrillen (15) beabstandete Laufrippen (14) aufweist und daß die einer Laufradmitte zugeordneten Laufrippen (14) eine größere radiale Erstreckung aufweisen als die äußeren Laufrippen (14).

8. Laufrolle nach einem oder mehreren der vorhergehenden Ansprüche oder insbesondere danach, dadurch gekennzeichnet, daß zwei Laufrippen (14) größerer radialer Erstreckung und zwei Laufrippen (14) kleinerer radialer Erstreckung vorgesehen sind.

9. Laufrolle nach einem oder mehreren der vorhergehenden Ansprüche oder insbesondere danach, dadurch gekennzeichnet, daß die Laufrippen (14) aus härterem, jedoch deformierbarem Material bestehen als der Grund des Laufbelages (13).

10. Laufrolle nach einem oder mehreren der vorhergehenden Ansprüche oder insbesondere danach, dadurch gekennzeichnet, daß der Abstand zwischen zwei Laufrippen (14) einer Breite der auf dem Transportband (T) ausgebildeten Stege (17) entspricht.

11. Laufrolle nach einem oder mehreren der vorhergehenden Ansprüche oder insbesondere danach, dadurch gekennzeichnet, daß ein Rechenkörper (33) vorgesehen ist, der in die Rillen (15) eingreift.

12. Laufrolle nach einem oder mehreren der vorhergehenden Ansprüche oder insbesondere danach, dadurch gekennzeichnet, daß der Rechenkörper (33) im Gabelgrund (36) gehaltert ist.

13. Laufrolle nach einem oder mehreren der vorhergehenden Ansprüche oder insbesondere danach, dadurch gekennzeichnet, daß der Rechenkörper (33) den Zenit (Z) übergreifend ausgebildet ist.

14. Laufrolle nach einem oder mehreren der vorhergehenden Ansprüche oder insbesondere danach, dadurch gekennzeichnet, daß an einem Rechenzinken (34) ein nach unten vorragender Auflagekörper (35) ausgebildet ist.

15. Laufrolle nach einem oder mehreren der vorhergehenden Ansprüche oder insbesondere danach, dadurch gekennzeichnet, daß der Rechenkörper (33) vertikal bewegbar gehaltert ist.

## Claims

1. Castor, for example steering castor (1), for transport devices such as shopping trolleys (8) or the like, for conveying on a conveyor belt (T) having a longitudinally grooved surface (16), with a wheel (2) having at least one groove (15) and mounted in a fork (3), wherein the roller comprises on the side face a cover plate (20) serving as thread protection and has a support foot (23), characterised in that the support foot (23) is supported by a cover plate (20) which does not rotate as well.

2. Castor according to claim 1 or in particular according thereto, characterised in that the support foot (23) is constructed integrally with the cover plate (20).

3. Castor according to one or more of the preceding claims or in particular according thereto, characterised in that the support foot (23) is constructed growing out of a protuberance (25) of the cover plate (20) extending in an axial direction of the wheel (2).

4. Castor according to one or more of the preceding claims or in particular according thereto, characterised in that the support foot (23) tapers towards the support surface (24).

5. Castor according to one or more of the preceding claims or in particular according thereto, characterised in that the fork (3) cooperates with the cover plate (20) in form-locking relationship.

6. Castor according to one or more of the preceding claims or in particular according thereto, characterised in that in the cover plate (20) is provided a tongue-like recess (28) for receiving the fork arm (4).

7. Castor according to one or more of the preceding claims or in particular according thereto, characterised in that the wheel (2) comprises a plurality of, particularly four, running ribs (14) spaced apart by longitudinal grooves (15) and in that the running ribs (14) associated with a wheel centre have a greater radial extent than the outer running ribs (14).

8. Castor according to one or more of the preceding claims or in particular according thereto, characterised in that two running ribs (14) of greater radial extent and two running ribs (14) of lesser radial extent are provided.

9. Castor according to one or more of the preceding claims or in particular according thereto, characterised in that the running ribs (14) are made of harder but deformable material than the base of the running cover (13).

10. Castor according to one or more of the preceding claims or in particular according thereto, characterised in that the distance between two running ribs (14) corresponds to a width of the webs (17) formed on the conveyor belt (T).

11. Castor according to one or more of the preceding claims or in particular according thereto, characterised in that a rake body (33) which engages in the grooves (15) is provided.

12. Castor according to one or more of the preceding claims or in particular according thereto, characterised in that the rake body (33) is supported in the fork base (36).

13. Castor according to one or more of the preceding claims or in particular according thereto, characterised in that the rake body (33) is designed engaging over the zenith (Z).

14. Castor according to one or more of the preceding claims or in particular according thereto, characterised in that on a rake tine (34) is formed a downwardly projecting bearing body (35).

15. Castor according to one or more of the preceding claims or in particular according thereto, characterised in that the rake body (33) is supported vertically movably

## Revendications

1. Galet de roulement, par exemple roulette directionnelle (1), pour des appareils de transport tels que des chariots d'achat (8) ou analogues, pour assurer leur transport sur un tapis roulant (T) présentant une face supérieure (16) dotée de rainures longitudinales, avec un galet de roulement (2) présentant au moins une rainure (15), montée à rotation dans une fourche (3), le galet de roulement présentant un disque de recouvrement (20), servant de protection anti-fils en face latérale et comportant un pied d'appui (23), caractérisé en ce que le pied d'appui (23) est maintenu sur une rondelle de recouvrement (20) qui ne tourne pas avec le galet de roulement.

2. Galet de roulement selon la revendication 1, ou bien en particulier comme suit, caractérisé en ce que le pied d'appui (23) est réalisé monobloc avec le disque de recouvrement (20).

3. Galet de roulement selon l'une ou plusieurs des revendications précédentes, ou bien en particulier comme suit, caractérisé en ce que le pied d'appui (23) est réalisé par excroissance à partir d'une surélévation (25) s'étendant, dans la direction axiale du galet de roulement (2), du disque de recouvrement (20).

4. Galet de roulement selon l'une ou plusieurs des revendications précédentes, ou en particulier comme suit, caractérisé en ce que le pied d'appui (23) va en s'effilant en direction de la surface d'appui (24).

5. Galet de roulement selon l'une ou plusieurs des revendications précédentes, ou en particulier comme suit, caractérisé en ce que la fourche (3) coopère, par une liaison avec ajustement de forme, avec le disque de recouvrement (20).

6. Galet de roulement selon l'une ou plusieurs des revendications précédentes, ou en particulier comme suit, caractérisé en ce que dans le disque de recouvrement (20) est prévue une poche (28) en forme de languette, destinée à recevoir la branche de fourche (4).

7. Galet de roulement selon l'une ou plusieurs des revendications précédentes, ou en particulier comme suit, caractérisé en ce que le galet de roulement (2) présente une pluralité, en particulier quatre, nervures de roulement (14) espacées par des rainures longitudinales (15), et en ce que les nervures de roulement (14), associées à un centre de galet de roulement, présentent une étendue radiale plus grande que les nervures de roulement extérieures (14).

8. Galet de roulement selon l'une ou plusieurs des revendications précédentes ou en particulier comme suit, caractérisé en ce que sont prévues deux nervures de roulement (14) de plus grande étendue radiale et deux nervures de roulement (14) de plus petite étendue radiale.

9. Galet de roulement selon l'une ou plusieurs revendications précédentes, ou en particulier comme suit, caractérisé en ce que les nervures de roulement (14) sont constituées d'un matériau plus dur, cependant déformable, que le fond du revêtement de roulement (13).

10. Galet de roulement selon l'une ou plusieurs des revendications précédentes, ou en particulier comme suit caractérisé en ce que l'espacement entre deux nervures de roulement (14) correspond à une largeur des nervures (17) réalisées sur le tapis roulant (T).

11. Galet de roulement selon l'une ou plusieurs des revendications précédentes, ou en particulier comme suit, caractérisé en ce qu'est prévu un corps formant racloir (33), s'engageant dans les rainures (15).

12. Galet de roulement selon l'une ou plusieurs des revendications précédentes, ou en particulier comme suit, caractérisé en ce que le corps formant racloir (33) est maintenu dans le fond de fourche (36).

13. Galet de roulement selon l'une ou plusieurs des revendications précédentes, ou en particulier comme suit, caractérisé en ce que le corps formant racloir (33) est réalisé en entourant la partie zenithale (Z).

14. Galet de roulement selon l'une ou plusieurs des revendications précédentes, ou en particulier comme suit, caractérisé en ce que sur une dent (34) du racloir est réalisé un corps d'appui (35) faisant saillie vers le bas.

15. Galet de roulement selon l'une ou plusieurs des revendications précédentes, ou en particulier comme suit, caractérisé en ce que le corps formant racloir (33) est fixé en étant susceptible d'être déplacé verticalement.
